# EUROPEAN PATENT SPECIFICATION

(11) **EP 1 946 166 B1**
(45) Date of publication and mention of the grant of the patent: **27.12.2017**
(21) Application number: 06779533.6
(22) Date of filing: 25.09.2006
(51) Int. Cl.: G02B 6/25

(54) **CLEAVING APPARATUS**
ABSPALTVORRICHTUNG
APPAREIL DE CLIVAGE

(30) Priority: 23.09.2005 GB 0519448; 19.07.2006 GB 0614284
(43) Date of publication of application: 23.07.2008
(73) Proprietor: Oxford Fiber Ltd, Rugby, Warwickshire CV22 5BQ (GB)
(72) Inventor: MURGATROYD, Ian, Warwickshire CV22 5BQ (GB)
(74) Representative: Somervell, Thomas Richard
(86) International application number: PCT/GB2006/003536
(87) International publication number: WO 2007/034205

(56) References cited:
- WO-A-00/41013
- WO-A-98/54608
- US-A- 5 838 850

## Description

This invention relates to cleaving of optical fibres including a method of cleaving an optical fibre and apparatus including the method of cleaving an optical fibre, in particular, cleaving an optical fibre which is clamped in one or more controlled ways.

Transmission of data using optical fibres is a well known, and advantageous method of communication. The use of optical fibres is, for example, extremely common in the telecommunications, automotive and aerospace industries. Optical fibres, and the use of such optical fibres, have many advantages over the still more common copper cable based systems, including, for example, immunity from electrical interference and increased data transmission rates and accuracy.

An optical fibre generally consists of a long strand of silica glass, the centre of which has a differing refractive index to the surrounding glass, causing optical confinement of the light in the core of the fibre. Each fibre, and particularly the core of each fibre, requires proper termination so that individual sections of optical fibre can be joined together so that light can cross from one fibre to the next, for example, where the fibre passes through a bulkhead or where optical transmitters or detectors require attachment to the fibre. Joins are typically made using specialist connectors, such as mechanical splices or the like.

Proper termination of the optical fibre requires that an end surface of the fibre is left substantially planar and atomically smooth, at a predetermined angle to the axial centre of the fibre, thereby allowing the unhindered passage of an optical signal across the join. The end surface is usually required to be substantially perpendicular to the axial centre of the fibre. However, some applications require other predetermined angles to be utilised.

Perpendicular end surfaces, for example, can result in approximately 4% of the light transmitted through the fibre and across the join being reflected back down the optical fibre. However, terminating the end surface at a predetermined angle of approximately 8° from the perpendicular substantially eliminates back reflections.

Typically, termination is achieved by cleaving the optical fibre, to give an end surface of the desired quality, at the predetermined angle, and cleaving is generally preferred because it is simple and, hence, more convenient than alternative techniques such as end polishing.

Typically cleaving involves scratching the silica region of the optical fibre to produce a starter crack, after removal of a section of its protective coating for access of the blade to the silica, whilst tensioning the silica region to cause the crack to propagate to complete the cleave.

Typically, application of a tensile force of a few Newtons is sufficient to cause immediate cleaving of the fibre once a starter crack has exceeded a certain critical depth of only a few microns. Once initiated, the cleave propagates generally perpendicular to the internal stresses in the fibre. For example, if the applied tension is exactly axial, the cleaved end will be substantially perpendicular to the central axis of the fibre.

However, applied tensile forces with non-axial components can result in non-perpendicular cleaved ends. Therefore control of the non-axial components may be utilised in order to produce a cleave at a particular predetermined non-perpendicular angle, additional uncontrolled non-axial components are highly undesirable. Such uncontrolled components can often arise, for example, from the twisting or shearing of the fibre.

Furthermore, excess tension can result in the crack propagating with excess energy, which can cause it to branch undesirably, leaving a roughened quality to the surface. Conversely, insufficient applied tension results in the critical crack depth, required to initiate propagation, being too large. Such a large critical crack depth requires a force to scratch the fibre which is so large that displacement of the fibre can occur, leading to uncontrolled end angles, damage to the blade used to scratch the fibre, etc.

The tension and/or the depth of the starter crack required to cleave the fibre can be reduced by bending the fibre slightly prior to scratching, using for example an anvil. The use of an anvil has the further advantage that it can be used to resist the cutting force required to introduce a scratch thereby allowing more controlled cleaving. For example, an applied tension of approximately 2 Newtons applied to a 125 micron diameter silica strand, having an anvil induced deflection of about 125 microns, will cause cleaving for a starter crack of depth 2 to 3 microns. Larger diameter fibres require greater tensions, approximately proportional to the cross sectional area of the fibre, to initiate cleaving.

A common aspect associated with a large number, if not all, cleaving tools currently available relates particularly to the means of holding the fibre to be cleaved in the tool prior to initiation of the cleaving operation. Control of the direction and quality of the cleave requires control of the internal stresses in the fibre(s). It has been thought that, in order to propagate the starter crack as a cleave across the fibre(s), the fibre(s) needed to be tightly held at two points to maintain tension in the fibre. For example, the FK 11 tool from Photon Kinetics (Oregon, USA), the RXS tool from Siemens (Germany) and the AFC tool from Oxford Fibre (Rugby, UK) all use metal clamping surfaces to clamp and trap the fibre(s). Such clamping between the metal and the glass of the fibre(s) can lead to damage to the fibre(s), damage to the clamping surfaces and difficulty in clamping more than one fibre because all fibres in a ribbon need to be held and stressed independently and equally. An example of such a tool is disclosed in the applicants own previous application WO 98/54608.

The present invention is concerned with overcoming or in the least alleviating the above mentioned problems associated with clamping the fibre(s) so that the internal stresses required to propagate the cleave can be controlled. Specifically this invention deals with using the deflection of the fibre from its natural path at or near to the cleave point to induce internal stresses in the fibre to propagate and control the cleave.

In accordance with the present invention there is provided a method of cleaving an optical fibre which has a natural path is cleaved by deflecting the optical fibre away from its natural path in a first direction and spaced longitudinal along its length deflecting the optical fibre in a second direction opposed to the first direction so as to induce internal stresses in the fibre that extend substantially across the core of the optical fibre over a region of the length of the optical fibre and scratching the surface of the optical fibre in the region with a cleaving blade so as to induce cleaving of the optical fibre wherein the cleaving is controlled by controlling the internal stresses induced in the fibre and wherein the method includes trapping the fibre , on either side of a cleaving hole (2100) in a reference plane, against said reference plane with one or more resilient members.

When an optical fibre is deflected, or bent, and then caused to re-bend substantially back on itself, for example forming a "S-bend". The shape of the re-bend used to effect the cleave can be a simple curve arrangement or alternatively a more complex shape. Internal stresses are induced in the optical fibre as a result of the re-bend that extend longitudinally along the optical fibre for a portion of its length, these stresses will be present also across the width of the fibre or a significant portion of the width of the fibre.

It will be appreciated by those skilled in this field that deflection or bending an optical fibre induces stresses that are related to the magnitude of the deflection or bend and that for a simple curve the optical fibre will be in extension on the outer side of the curve and compression on the inner side of the curve. Further the internal stresses will vary between extension forces and compression forces, as well as magnitude, across the width of the fibre and in the transition there will be a neutral zone when no internal stresses are effectively present.

As will be understood by a man skilled in the art when an optical fibre is cleaved the extensive stresses in the fibre provide a degree of control to the cleave which enables cleaving in a determined plane. This plane can be either perpendicular to the optical fibre or at an angle to the perpendicular. However, when the cleave passes into or through an area where the stresses in the optical fibre are not high enough, or through a region where the stresses are zero - known as the neutral axis - or a region where the stresses are compressive, the control of the cleave is lost and the path of the cleave takes on an uncontrolled nature. This can lead to a spur forming on one end of the cleaved optical fibre during cleaving. It is therefore important that the extensive stresses induced in the fibre are induced in such a manner as to allow the control of the internal stresses to extend across the width of the core of the optical fibre.

The provision of a simple deflection or bend in a fibre is not normally sufficient to control the stresses in the region of the core of the fibre and so the resultant cleave will be uncontrolled in the region of the core of the fibre and light will not traverse the termination of the fibre.

It is the control of the curvature, therefore, that provides a means by which the induced stresses within the fibre can be controlled in order to facilitate cleaving of the fibre in a controlled manner.

Further the optical fibre may also be placed under extension in the longitudinal direction. This provides a means by which the location of the neutral axis in the deflected fibre can be moved across the width of the fibre.

Typically an optical fibre includes a plastic coating about an optical glass strand. The coating is provided to protect the glass strand of the fibre, and to facilitate efficient cleaving of the optical fibre has to be stripped from an end section of the fibre to expose the glass strand. Normally it is the end section of the fibre which is cleaved and on which a cleaving tool will operate. The present invention utilises the deflection of the glass strand to induce the internal stresses needed in the fibre to enable efficient cleaving and therefore the end section of the optical fibre does not necessarily need to be held. For example, deflection of the optical fibre can be achieved by movement of components in the apparatus and therefore the optical fibre will be constrained but is not trapped. This can be referred to as "non-trapping" clamping of the optical fibre.

Further to facilitate the cleaving of the fibre the fibre may be clamped remotely of the cleave area, being clamped around the coated fibre.

Yet further to facilitate the cleaving, the fibre(s) may be contained within a ferrule(s) or other containing member(s), distant from or adjacent to the stripped section of the fibre(s), wherein the ferrule is clamped and the fibres contained therein are therefore clamped.

Typically all presently available cleaving apparatus use a clamping system which traps the optical fibre in the region of the fibre in which the cleave will take place, a load is directly applied to the fibre with this arrangement. This type of arrangement is referred to as "hard" clamping, i.e., the fibre is constrained from moving in the presence of a longitudinal force As will be well appreciated by the man skilled in the art with "hard clamping" systems there is a significant chance that the glass strand may be damaged.

In the present invention the non-trapping nature of the cleaving system means that this problem of damaging the fibre with the load applied in trapping the fibre is overcome.

Further with conventional systems the trapping clamps mean that the space in the vicinity of the cleave is cluttered and access of the cleaving blade to the fibre to effect the cleave inhibited. The present invention negates the need for close clamping means and this problem is also overcome.

The invention also envisages an intermediate clamping system, referred to as "soft clamping" in which the fibre is partially trapped but able to move longitudinally through the clamp if the force exceeds a certain value. "Non-trapping" clamping does not provide significant resistance to longitudinal movement of the fibre through the clamps.

The advantages that are available with non-trapping, or soft clamping, cleaving includes:
surfaces of the clamps will not be damaged by excess pressure when trying to "hard clamp" an optical fibre for cleaving:
   fibre will not be damaged because lower clamping pressures than required are used;
   ribbon fibre cleaving becomes an easy and repeatable operation;
   optical fibre off cuts can be disposed of more easily;
   lower tolerances will be required in order to clamp fibre off cuts leading to reduction in the cost of the production units for such cleaving tools;
   the offcut could be used as an optical jumper for transmitting optical signals over distances as short as 3 mm (very difficult to achieve if you are hard clamping); and
   mechanical optical splicing tools that involve butting together of angled cleaves (reducing back reflection) are possible.

Apparatus provided for cleaving an optical fibre in accordance with the first aspect of the present invention, which optical fibre passes through the apparatus along a natural path and has an end section thereof in which the glass strand of the fibre is exposed, includes means to deflect the optical fibre from its natural path in a first direction; means to deflect the optical fibre from its natural path in a second direction in opposition to the first direction; and means to scratch and cleave the optical fibre wherein the end section of the optical fibre may or may not be trapped and the deflection of the optical fibre induces the fibre to re-bend so that internal stresses in the fibre over a region of the length of the fibre are induced and the means to scratch is operated to scratch the surface of the fibre in the region and the cleave induced wherein one or more resilient members provided to trap the fibres against a reference plane bed of the apparatus, the reference plane bed having a cleaving hole therein and said resilient members arranged to clamp the fibres on either side of said cleaving hole.

In accordance with the present invention the end section of the optical fibre may or may not be trapped but is preferably confined.

In one arrangement of the present invention the apparatus also acts to apply a longitudinal extension force to the optical fibre. In order to effect this the coated strand portion may be "hard" clamped remotely of the cleave site. This clamping will be in a region of the fibre where the strand is protected by the protective jacket of the fibre.

The apparatus may also include an anvil. Any conventional type of anvil may be used for example a single arm or double arm arrangement. In the instance where a perpendicular cleave is required the preferred option is a single pole anvil. However in the instance where an angled cleave is required a twin pole or arm anvil is preferred. The arms/poles of the anvil can be preset to provide a defined angle of cleave and/or the anvil arrangement may be rotated about as fulcrum to provide the desired angle of cleave.

In one embodiment of the present invention, the means to deflect the optical fibre from its natural path may include at least one guide rod which guide rod is movable in relation to the fibre so that it deflects the optical fibre from its natural path inducing the necessary internal stresses in the fibre.

The guide rod may be formed with means, for example, a groove, in its surface to enable the optical fibre being deflected to be located and correctly aligned with regard to the guide rod to facilitate accurate cleaving. The groove may be formed so that when the fibre is located within the groove said fibre will extend above the sides of the groove. This will enable ready access for a blade to scratch the fibre and, therefore, facilitate cleaving of the fibre.

The guide rod may be formed from any suitable material, or may be coated with any suitable material. The guide rod may be formed, or coated, with a material that acts to grip the material of the coating of the optical fibre.

Alternatively the means to deflect the optical fibre may comprise two plate like components between which the end section of the optical fibre is located. Further still components of the apparatus, for example the anvil or the blade may include or comprise the means to deflect.

In an arrangement of the apparatus of the invention the means to deflect the end section of the optical fibre in a first direction comprises a guide rod and the means to deflect the optical fibre in a second direction comprises two flat plates like members that confine the optical fibre inducing the necessary deflection to induce the internal stresses.

In an alternative arrangement of the invention the means to deflect the optical fibre comprises a ferrule located over the end of the fibre to be cleaved and the optical fibre is located loosely, so that it is not trapped, between closely orientated components so that the ferrule can be moved to induce a S-bend in the fibre. The optical fibre is then cleaved in the normal manner. If an angled cleave is to be induced in the fibre the ferrule can be located so as to present the fibre for the correct angle of cleaving. However if a perpendicular cleave is desired a further component, for example anvil, or guide rods may be used to correctly orientate the optical fibre for cleaving.

Apparatus made in accordance with the present invention may be used to cleave either single optical fibres or ribbon arrayed optical fibres.

In the latter example where a ribbon fibre array is being cleaved the methodology of the present invention is used in a technique in which a window is opened in the encapsulation surrounding the ribbon array so as to allow access to the optical fibres and allow deflection by an anvil and scratching by a blade in accordance with the present invention

In the example of the cleaving of an optical fibre ribbon array the ribbon has to have the encapsulation coating on the ribbon removed to provide blade access to the optical fibres so that the ribbon array can be cleaved. The ribbon encapsulation may be removed using the following method detailed below wherein the ribbon is placed in a stripping tool, for example a thermo mechanical stripping tool which is heated to approximately 85°-90°C to facilitate stripping of the ribbon coating. However, other means may be used to remove the encapsulation for blade access including laser ablation, laser or arc heating or heating by use of a jet or bursts of hot air.

The elevated temperature is sufficient to break the bond between the coating and the glass fibres, allowing easy removal by pulling off the coating. However, if the coating tube is only partly pulled off, a glove of coating remains over the fibres and if the ribbon is allowed to cool, the coating partially reforms a bond with the optical fibres, providing resistance to further removal of the coating glove from the fibre ribbon. This coating glove can be used to clamp the fibres contained therein during subsequent operations such as cleaving.

The encapsulation of the ribbon fibre may be window-stripped as follows:
the encapsulated ribbon is located in a fibre clip that is placed in a thermal stripping tool so that approximately 22mm of the distal end of the coating is removed
the ribbon is repositioned in the clip with approximately 33mm protruding and replaced in the thermal stripper. The stripper may be placed in a jig with a stop to limit the distance the second piece of coating is pulled off by the stripping tool to about 10mm
the ribbon has now been window stripped.

The ribbon comprises a length of stripped fibres bounded on one side by the untouched encapsulation and on the other by the partly stripped coating glove

The window-stripped ribbon, still located in the clip may be placed in a cleaving tool and cleaved in accordance with the present invention as follows:
clamping each of the fibre(s) at two points by clamping through the coating
tensioning each of the fibres by deflecting the fibre(s) laterally between the clamps using an anvil
bending and/or shearing the fibre(s) using the anvil to change the stress profile in the fibre(s) and to provide resistance to the scratching means
scratching the stressed fibre(s) with a sharp edge such as a diamond blade

In this cleaving process:
perpendicular cleaves for subsequent splicing are obtained by using a two armed anvil and scratching there between
angled cleaves for reduced back-reflection are obtained by using an anvil to shear the fibre between the anvil and the clamp prior to scratching with the blade, as taught by Murgatroyd in PCT/GB98/01598. The anvil used may be a one armed /post anvil or alternatively a two armed/post arrangement. If a two arm/post arrangement of anvil is adopted the fibre would be bent non-symmetrically, e.g. when the arms of the anvil are of unequal length, the anvil does not act centrally in the gap or when the clamping surfaces on either side of the blade are of different heights

The above-described cleaving technique may be adapted for ribbon cleaving and enables reliable ribbon cleaving to be readily obtained. In one example a 4-fibre perpendicular cleave achieved end angles within 0.5° of perpendicular for all 4 fibres, and a 4-fibre angled cleaving achieved end angles across the core 8° away from perpendicular within +/-1° for all fibres. The cleave lengths achieved were all the same to within 25microns.

The above description describes where the coating is removed for blade access to the fibre(s) that are scratched and cleaved due to their internal stress induced by deflection from their natural path. However, this invention also includes the case in which the coating is not removed, rather the glass is scratched through its coating, causing a starter crack to be generated in the fibre which spreads due to the internal stresses induced in the fibre(s) by their deflection to effect the cleave. Scratching the glass through its coating is used when the coating is either thin or difficult to remove, as in the case of thin polyimide coatings.

The above description includes a blade to scratch the fibre(s) and this may be in the form of a linear sharpened blade, e.g. made from diamond or other hard material, or in the form of a circular sharpened blade or blade of other shape or material. To create the scratch, the blade may be moved in to the fibre or vice-versa. The angle of attack may be perpendicular, tangential or intermediate. One example is seen in the tool made by Fujikura, Japan and others, in which a circular, sharpened metal or carbide blade is passed under the fibres, and its height adjusted to just touch and so scratch the fibres. Another example is seen in the tool made by Oxford Fibre, UK in which a linear, sharpened diamond blade is driven at a glancing angle of about 20 degrees from the tangent.

Other applications are also envisaged where photosensitive window-stripped fibres are each clamped through their coatings and are introduced in to an apparatus for writing Fibre Bragg Gratings (FBGs) in to the stripped fibres by illumination with UV light through a phase mask. The clamping of each of the fibres allows the fibres to be tensioned prior to production of the FBGs so that the operating wavelength of the FBGs when the tension is released can be controlled using a single-phase mask.

In one particular embodiment of the present invention the apparatus in accordance with the present invention includes one or more members, for example, an "O" ring, which are provided to soft clamp the coated optical fibre(s). In this arrangement the members ("O" rings) trap the coated fibre against a second surface, for example, the reference plane of an optical fibre cleaving tool.

The members are preferably "O" rings and may comprise elastomeric or elastomeric coated "O" rings. In an alternative configuration resilient members are used, for example a simple leaf spring which acts against the fibre end. The resilient member may be coated with an elastomeric material to protect the fibre being held.

One example of the use of this soft clamping technique is in a hand tool for cleaving optical fibres which hand tool comprises a handle; a bed pivotally mounted to the handle providing the reference plane for cleaving of an optical fibre; an anvil pivotally located with respect to the reference plane and including fibre deflector means that is designed to extend into a throughway provided in the reference plane; means to locate an optical fibre to be cleaved with respect to the reference plane so that it extends across the throughway in the reference plane; one or more means of clamping the fibre to the reference plane on either side of the throughway; and a cleaving blade arrangement located to scratch the optical fibre as it extends across the throughway in the reference plane wherein an end section of the optical fibre having the coating stripped therefrom is located in the means to locate and so extends over the throughway and when the hand tool is operated the anvil pivots with respect to the reference plane so that the at least one elastomeric member or elastomeric coated member engage the reference plane immediately adjacent the throughway soft clamping the optical fibre and the optical fibre deflector means in combination with the sides of the throughway deflects the optic fibre in a first direction on one side and in a second direction on the other side from its natural path inducing the necessary internal stresses in the optical fibre in the region across the throughway and the blade scratches the optical fibre to effect the cleaving of the optical fibre.

It will be appreciated that resilient means may also be used to clamp the fibre(s) against the second surface on one or both sides of the throughway. The clamping of the fibre(s) may be "hard-", "soft- "or "non-trapping-" clamping on one or both sides of the throughway provided that controlled internal stresses are induced across the core of the fibre for control of the cleaving.

The means to locate the optical fibre may comprises location dowels arranged in pairs wherein the optical fibre is disposed between the respective dowels of a pair for locating the optical fibre. The dowels will normally be arranged in pairs located at discrete points along the length of the natural path of the optical fibre and preferably are disposed on both sides of the throughway respective of the natural path of an optical fibre.

The spacing between the dowels in a pair of dowels may be set to allow passage of the coated fibre or the glass strand of the fibre only and thereby provide the means which positions the end section of a fibre to be cleaved and fixes it for the cleaving operation.

Consequently, with this embodiment the use of the "O" rings or elastomeric coated member in this manner to locate the end section of the optical fibre is not necessarily "hard clamping". The "O" ring or elastomeric coated member grips the optical fibre by the very nature of the material from which it is formed and places a pressure on the fibre causing bending of the fibre and so controlled internal stresses across the cores of the fibres.

The throughway may be provided with side depressions which in the operation of the tool at least one elastomeric member or elastomeric coated member locates and traps the fibre

The "O" rings or elastomeric coated member may be configured in a group or as one or more discrete members or groups. In one arrangement of the invention "O" rings are provided on both sides of the throughway. It will be appreciated that the "O" rings may be provided on one side of the throughway only. These configurations equally apply to the use of elastomeric coated members.

The "O" rings may be arranged so that they engage the optical fibre via the outer side wall, such they are standing up, or in an alternative configuration they may arranged on their side so that diametrical opposed side portions of the "O" ring engage the optical fibre, such that they are lying down.

In all of the above examples, the tool may also include a pre-clamping member which clamps the coated optical fibre in place at a position remotely of the cleave area. The pre-clamping member may comprise a member pivotally mounted to the bed.

Alternatively, in all of the above descriptions, the fibre(s) may be contained within a ferrule(s) or other containing member(s), distant from or adjacent to the cleave area, wherein the ferrule is clamped and the fibres contained therein are therefore clamped.

The invention will now be described by way of example, with reference to the accompanying drawings, in which:
Fig 1 shows a schematic representation of an optical fibre cleaving apparatus;
Fig 1a shows a schematic representation of optical fibre lying in its natural path;
Fig 1b shows a schematic representation of optical fibre cleaving apparatus;
Fig 1c shows a schematic representation of optical fibre cleaving apparatus;
Fig 1d shows a schematic representation of cleaved end of the optical fibre after cleaving;
Fig 1e shows a schematic representation of cleaved end of the optical fibre after cleaving;
Fig1f shows a two arm anvil arrangement suitable for use with the present invention:
Fig 2 shows a schematic representation of a cleaved fibre end;
Fig. 3 shows a cross-sectional view of a 4-fibre ribbon with primary coating around each fibre and all 4 fibres enclosed by an encapsulation.
Fig. 4a shows a fibre ribbon with its distal end stripped;
Fig. 4b shows a fibre ribbon with a coating glove;
Fig. 5a shows a plan view of the thermal stripper suitable for use with this invention in the manufacture of a ribbon cleave; where the stripper is shown placed in a cradle
Fig. 5b shows a cross-sectional view of the stripper shown in fig 5a;
Fig 6 shows a window-stripped fibre ribbon;
Fig 7 shows the side view of a fibre ribbon;
Fig 8 shows a diamond blade scratching tensioned and deflected fibres;
Fig 9 shows the shape of the end angle obtained:
Fig. 10 shows the side view of a window-stripped fibre ribbon of Fig 9 with a 2-armed anvil suitable for near-perpendicular cleaving;
Fig 11 shows a window-stripped fibre clamped through its coating;
Fig 12 and 13 show a hand tools that operates in accordance with the present invention;
Fig 14 shows a schematic representation of optical fibre deflected by the anvil in to the opening of the reference plane to form an angled cleave;
Fig 15 shows a schematic representation of optical fibre deflected by the anvil in to the opening of the reference plane to form a near perpendicular cleave; and
Fig 16 shows an alternative anvil arrangement which is not part of the present invention;
Figs 17 and 18 show alternative methods of re-bending the fibre for cleaving in accordance with the present invention.

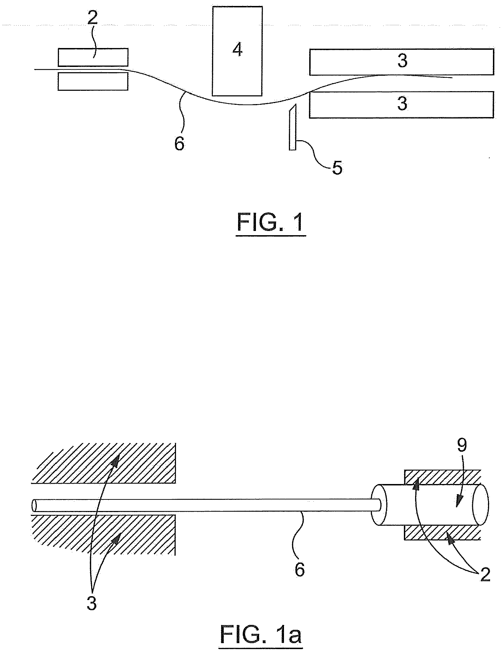

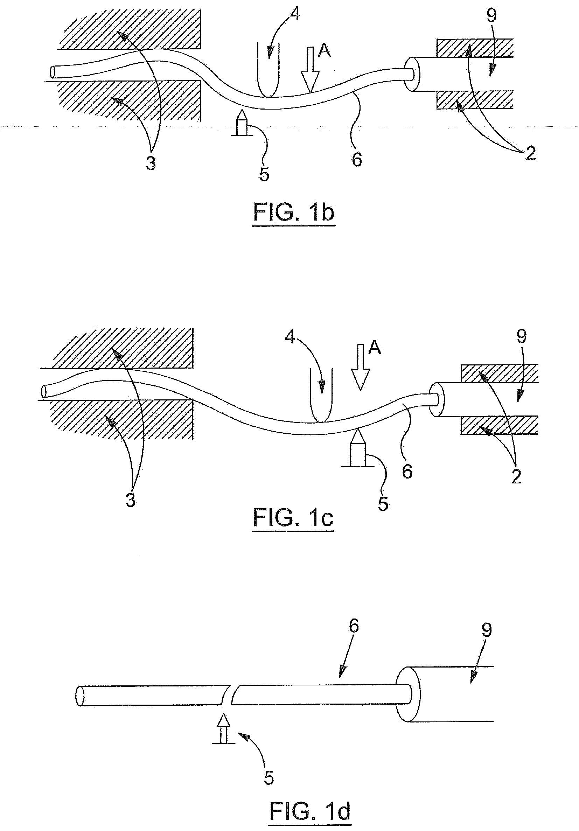

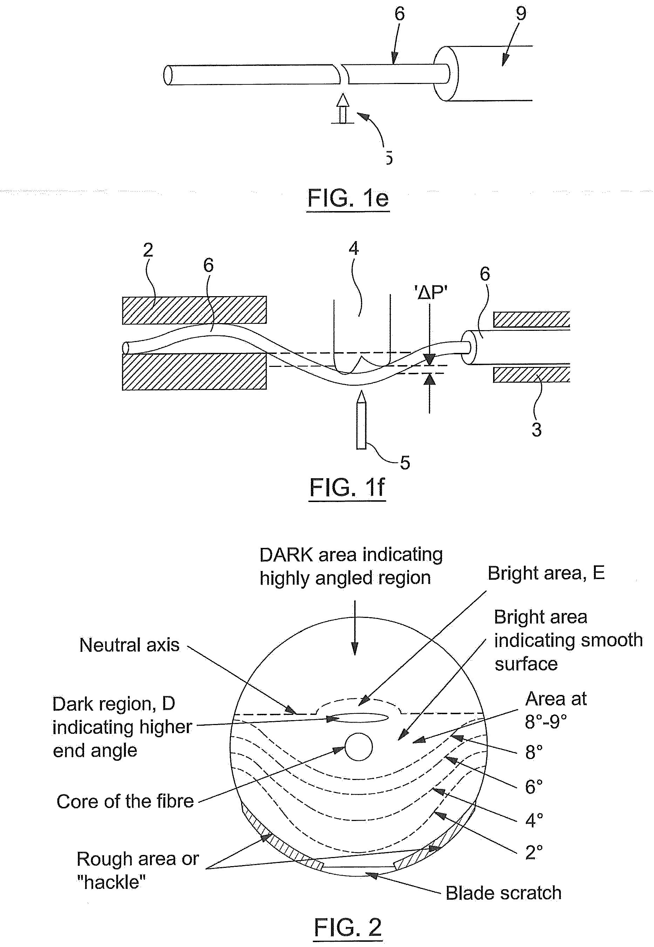

Now referring to Figure 1-1f of the drawings, there is shown a schematic representation of cleaving apparatus (not currently claimed). The cleaving apparatus 1 includes remote pre-clamping means 2, optical fibre directing means 3, an anvil 4 and a cleaving blade 5. The optical fibre directing means 3 comprises two plate members 8 which confine the optical fibre.

In use, an optical fibre 6, optionally including a coating 9, that has an end section 7 that is deployed through the clamping means 2 by the anvil 4, past the blade 5 and between the plates of the optical fibre directing means 3. The fibre is deployed so that the end section 7 over which the coating has been removed is in the vicinity of, or adjacent to, the cleaving blade 5.

Fig 1a shows the fibre lying in the apparatus in its natural path - i.e. not yet deflected. This defines the natural position of the optical fibre 6 in the apparatus wherein it is loosely located and is free from tension or stress. The optical fibre may be deployed in any locating means provided in the apparatus, for example a groove provided in the pre-clamp 2 or the optical fibre directing means 3.

In operation, as shown in Fig 1b, the pre clamp 2 is activated, holding the coated optical fibre 6 in position. The anvil 4 moves in the direction of arrow A deflecting the optical fibre 6 from its natural path and forcing it downwardly towards the cutting blade 5. The confinement of the optical fibre 6 in the optical fibre directing means 3 causes the fibre 6 to re-bend and so inducing internal stresses to form in the optical fibre in the region of the adjacent the bending of the fibre 6. In operation the amount of the deflection induced in the fibre is dependent on the size of the glass strand of the fibre, with greater deflections required for smaller fibre diameters and vice-versa. Typically, deflections in the range of 0.02mm to 2mm are used for 125 micron diameter fibre for spacing between the anvil 4 and the fibre directing means 3 of 0.2-100mm for angled cleaving and anvil widths of 0.2-100mm for perpendicular cleaving. Typically the deflective force applied is no more than 0.1 to 1 Newtons.

The above description describes cleaving of a 125 micron fibre but it will be well understood that this is simply to exemplify the current invention and the method and apparatus may be used on any size of fibre.

Cleaving may be carried out for larger fibre of up to 3mm in diameter, using smaller fibre deflections for the same spacing or larger spacings for the same deflection, than for 125micron diameter fibre exemplified above. Cleaving is carried out for smaller fibre as small as 30 microns in diameter, using larger fibre deflections for the same spacing or smaller spacings for the same deflection, than for 125micron diameter fibre."

In addition as the anvil deflects the fibre and the blade scratches the surface of the fibre the fibre is pulled longitudinally of its length adding further to the stresses generated in the fibre 6 if the fibre is "hard-" or "soft-clamped" by the fibre deflecting means 3. In the case of "non-trapping" clamping, no overall tension is induced in the fibre because the fibre can slip through the clamps. However when the fibre is "non-trap-"clamped on both sides of the cleaving point, i.e. the fibre is free to move through the cleaving apparatus, cleaving can also be effected.

The internal stresses induced in the fibre 6 may be controlled by the degree of deflection etc, the degree of the longitudinally extensive force applied and the curvature of the deflection to suit the particular type of fibre to be cleaved so that stress is present in the deflected optical fibre 6 at least across its optical core in the region of the blade 5.

With the fibre deflected in the general manner indicated the blade 5 is caused to scratch the surface of optical fibre 6 and the cleave induced. In order to cleave the fibre the cleaving blade is operated in the normal fashion and with the normal consideration with regard to the stresses induced in the optical fibre such that once the fibre has been scratched in the normal manner the cleave will be completed across the core of the fibre

Figures la, 1b of the drawings illustrates the general fundamentals associated with the operation of the present invention. The general principle of the invention is suitable for producing either perpendicular or angled cleaves (up to 8°) and its use is broad. The driving force may have been for terminating optical fibre for use in the telecommunications field but the principle has application outside of this field also..

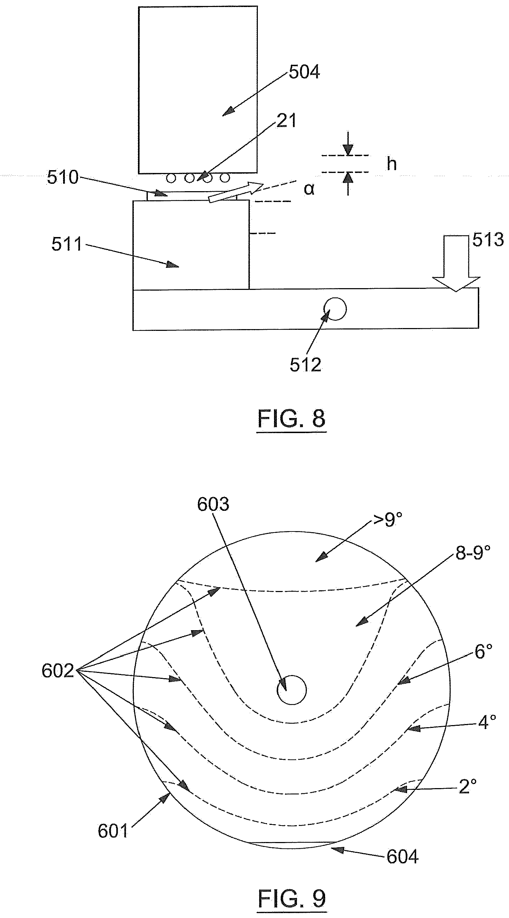

In the case where a perpendicular cleave is desired then a single arm post arrangement would be preferable for cost reasons. This does not negate the possibility of chieving angled cleaves and the angled cleaved faces shown in Figs 2 and 9 may also be obtained from scratching the fibre(s) at a point where the anvil is located between the cleave point and the clamps 2, as shown in Fig 1b. The path of the cleave is angled towards the point of contact of the anvil so that the end of the fibre which is later used (the working end, on the right side of Figs 1) is rounded, as shown in Fig Id. It is also possible to scratch the fibre at a point between the point of contact of the anvil and the clamps 2, as shown in Fig 1c. The resultant cleaved end is also angled, with a shape inverse and matching to that of Figs 2 and 9, but the direction of the cleave is again towards the point of contact of the anvil and so, especially for end angles of greater than about 5 degrees form the perpendicular, the end of the fibre which is later used (the working end, on the right side of Figs 1) has a fragile protrusion, as shown in Fig 1e. Such protrusions are generally not desirable, but this configuration is advantageous in certain applications because the resultant cleaved end has not been touched by the anvil so is potentially higher strength without any damage. The protrusion can be reduced by tensioning the fibre during cleaving and using "hard-clamping".

Further in each of the drawings referred to above and as follows the anvil is shown as a simple post. This was to show the location of the anvil and had no intended implication that the invention was only suitable for use with a single pole or arm anvil. The invention is suitable for use with any conventional anvil and the actual choice of the anvil that is made will depend on the application to which the cleaving apparatus is designed for.

However where an angled cleaved is desired a two arm arrangement would be more suitable and may be adopted. This type of arrangement is shown in Fig If of the drawings and provides an alternative way of achieving angled cleaves to that described above for a single post system. In this particular arrangement the two arms of the anvil have different heights and this difference in heights sets the standard cleave angle for the anvil. The cleave angle can then be adjusted by rotation of the anvil about a fulcrum to exacerbate the difference in height or reduce the effects of the difference in height.

Now referring to Figure 2 of the accompanying drawings there is provided a schematic representation of an angled cleaved end face of an optical fibre made in accordance with the present invention, showing the contours of equal end angle (as measured by interference microscopy), the core of the fibre and the initiation scratch. In this case the fibre has been clamped with a "non-trapping" clamp. Figure 9 shows a similar angle cleaved end face in which "hard clamping" has been used. It can be seen that the "hard clamped" cleaved surface is less rounded in the region distant from the initiation scratch, but "non-trapping", "hard clamping" and the intermediate "soft-clamping" all give controlled cleaves in which the core of the fibre is angled at about 8° away from the perpendicular, so eliminating back-reflection.

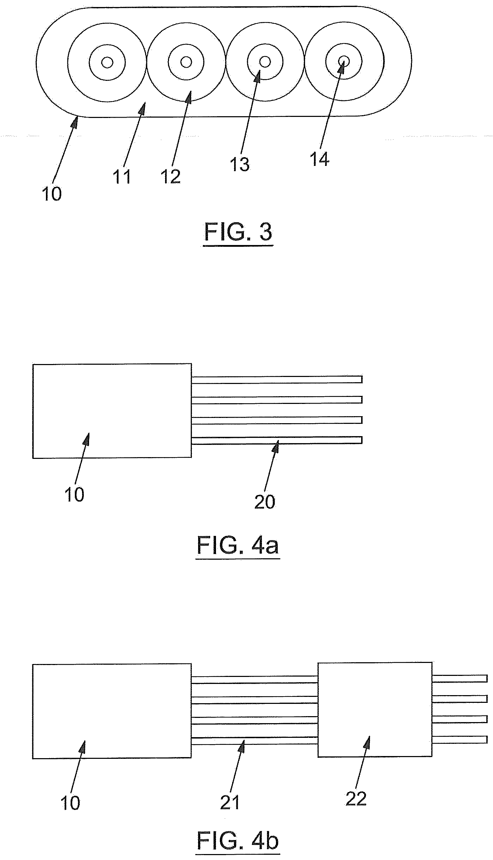

Now referring to Figs 3 to 11 of the drawings there is described a cleaving technique suitable for use with ribbon fibre arrays.

A ribbon fibre window-stripping apparatus according to the present invention comprises:
an electrically powered, thermal stripping tool 101, commercially available from Sumitomo Electric or otherwise
a stretching cradle 201 which serves to hold the thermal stripper to allow smooth operation and limit the distance the fibre coating 10, 11, 12 is slid along the fibres 13
a movable clip 301 to hold the ribbon fibre 10 during stripping and in which the window stripped fibre 10, 21, 22 is transferred to the cleaving unit 504, 301, 501

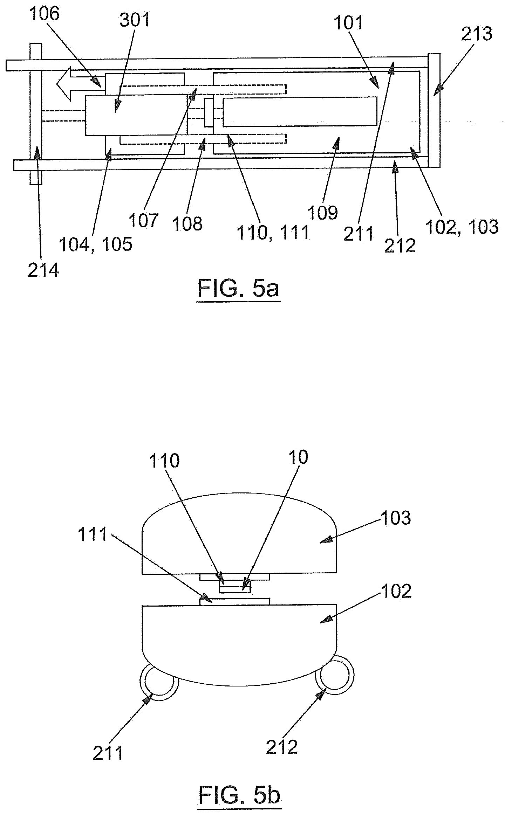

The thermal stripping tool 101 is shown in Figs 5a and 5b in plan view and in cross-section, respectively. It is made up of: alower and upper base section, 102, 103 with an upper and lower slider section 104, 105, whereby the slider section is normally closed but can be moved in direction 106, sliding on rails 107,108, in order to pull off the coating. A heater strip 109 is incorporated in the lower base section 102 and is used to raise the temperature of the encapsulated fibre to weaken the bond between the coating and the glass of the fibres. The tool must be left in heating mode for approximately 15 minutes after switch-on to warm up. Blades 110, 111 are used to cut through the heated coating so that the coating can be pulled off as a tube.

The stripping tool is first used to remove fully the distal end of the coating, as follows. The coated ribbon fibre 10 (see Fig 3), with its encapsulation 11 surrounding the individual coating of the fibres 12, the glass fibres 13 and their cores 14, is placed in the movable fibre clip 301 with approximately 20mm of coated fibre ribbon protruding from the end of the clip. The clip and fibre are then loaded in to the stripper where the stripper's slider section 104, 105 is fully closed against the stripper's base 102, 103. The lids of the base 103 and the slider unit 105 are then closed such that the protruding fibre is heated by the heater strip 109 in the base unit 102 and the fibre clip is securely held and pressed together by the top and bottom 104, 105 of the slider unit. After a period of approximately 5 seconds, the fibres are sufficiently warm, having reached the stripper's set temperature of about 85°-90°C, and can be stripped. This is done by pressing together the top and bottom of the base unit 102, 103 so that the opposing blades 110,111 partially cut in to the coating 11, 12 of the ribbon. The slider unit's top and bottom 104,105 are squeezed together, gripping the clip and fibre, and pulled along its rails 107, 108 away from the base unit until it reaches the end of the rails, so fully stripping the distal end of the fibre ribbon. The stripped fibre in its clip is removed and the stripped coating removed from the tool. Because of the position of the cutting blades in the stripper, approximately 3mm of coating remains protruding from the clip and approximately 17mm of stripped fibre makes up the distal end of the ribbon. Fig 4a. shows the stripped fibre resulting from the first operation of the tool with the stripped fibres 20 and the unstripped coating 10.

The ribbon fibre is repositioned in the movable clip 301 so that approximately an extra 10mm of coating protrudes from the clip, as well as the length previously stripped. The clip and the repositioned fibre are then replaced in the stripping tool. The stripping tool 101 is then placed in a cradle 201 so that the coating can only be slid a short distance along the fibre. The stripping tool 101 is placed on top of the rails of the cradle 211, 212, butting up against the cradle end 213.

A second operation of the tool is carried out, comprising: loading the fibre and clip into the tool, closing the two lids, waiting for 5 seconds for the fibre to warm up, pressing together the top and bottom of the base unit to cause the opposed blades to partially cut the ribbon, and finally pressing together the top and bottom 104, 105 of the slider unit to grip the clip and sliding it away from the base unit along the rails 211, 212 in the cradle until it hits the adjustable end stop 214.

The stop 214 limits the length by which the second piece of coating is removed from the fibres. Consequently a coating glove 22 remains on the stripped fibres 21 (see FIG. 2b). The stop 214 is adjusted so that approximately 10mm length of fibres is window-stripped and approximately 10mm of coating glove remains on the stripped fibre. When the clip 301 and stripped fibre is removed from the stripper, the coating glove cools down and reforms a bond with the glass of the fibres.

It will be understood that the second stripping action leading to the formation of the coating glove can also be carried out using the stripper without the cradle 211, 212.

The coating glove should be well formed and it should not buckle the fibres therewithin. Only if the coating glove is well formed can it be placed in the fixed clip 501 of the fibre cleaver. Factors that lead to a poor coating glove include:
low temperature of stripping tool - leave for 15 minutes after start-up before using
non-axial motion of the slider unit but this is substantially improved using the cradle and sliding the slider unit along the rails
incomplete stripping of the encapsulation is often caused by insufficient clamping force to grip the fibre ribbon.

The tool can window-strip ribbons containing between 1 and 24 fibres or more.

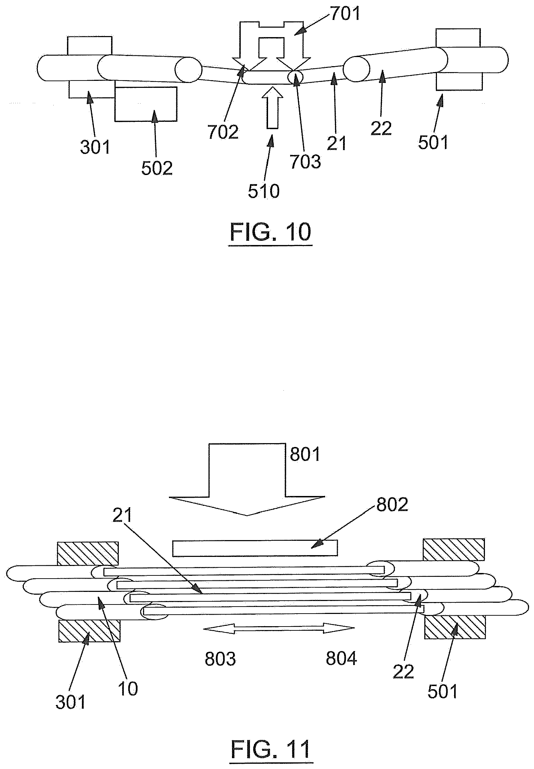

Various applications of the apparatus described and shown in Figs 3 and 11 are discussed in which the use of a window stripped coating glove is advantageous.

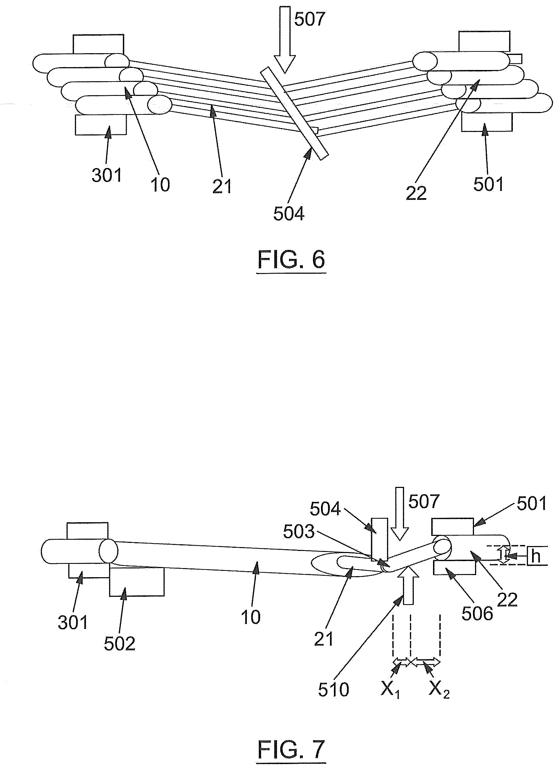

In one application, the window stripped fibre ribbon 21 can be placed in a ribbon fibre cleaver to create angled or perpendicular cleaved ends. Fig. 6 shows the window-stripped fibre clamped in to the cleaver with an anvil 507 tensioning and shearing each fibre in the ribbon with substantially equal forces on each fibre in the ribbon. The movable clip 301 containing the window-stripped fibre ribbon is placed in a cleaving jig (see Fig 6, 7), in which the movable clip 301 is securely held in to the body of the cleaver and such that it is pressed up against a stop 502 to ensure a consistent cleave length. Such securing means can be achieved by a magnetic arrangement, by a clip arrangement or otherwise.

The coating glove 22 is held by a second clip 501 that is fixed to the cleaver body. When the clip is closed, the coating glove is securely closed. Provided the window stripping has been carried out to produce a clean coating glove that avoids buckling the fibres, the coating glove is clamped by the fixed clip such that the stripped fibres lie straight and unbuckled in the cleaver. The two clips serve to clamp the fibre coatings and therefore serve to clamp at two points each fibre contained within the coating. The window-stripped ribbon fibre is placed in an angled cleaving jig, constructed according to the teachings of Murgatroyd, PCT/GB98/01598. An angled cleaved end is achieved by shearing a fibre or fibres between the abrupt edge 503 of a one-armed anvil 504 and the closely located edge 506 of the fixed clamp 501.

On operation of the cleaving tool, an anvil 504 moves in direction 507 to deflect laterally the window-stripped fibres clamped in their coatings at a point between the two clamps 301, 501 (see Fig 6, 7). The anvil movement lengthens the fibres fixed between their two clamps and so tensions them. For a clamp spacing of about 10mm and an anvil deflection in the range of 0.3-1.0mm, the fibres are lengthened sufficiently to impart a tensile force of the order of 2 Newtons. The exact magnitude of the deflection required to create the appropriate tension is dependent on the compliance of the bond between the coating glove and the fibres, and so the fibres should be cleaved and examined and the deflection adjusted to obtain the correct tension for optimum cleaving.

The anvil movement also serves to shear the fibres between the edge of the anvil 503 and the edge of the fixed clamp 506 (see Fig.7). The tensioned and sheared fibres are then scratched by a diamond blade 510 to initiate an angled cleave. The diamond blade may be moved to contact the stressed fibres or the action of deflecting the fibres can cause them to come into contact with the blade, or otherwise. In all cases the blade scratches each fibre to cause an initiator crack 604 which is propagated across each stressed fibre as a cleave. In Fig. 9, the blade 510 is mounted on its support 511 which swings about a pivot 512 and is actuated in direction 513, may move at a acute angle alpha, α to scratch the fibre (see Fig 8), so reducing the cutting stresses or may fall away under the action of the scratching. Preferably the fibres should be scratched at a point where x₁ < x₂ at a point on the outside of the bend to allow easy penetration of the blade in to the fibre.

It has been found that it is possible to achieve end angles in the range of 1°-60° by altering the values of x₁, x₂ and h. The value of x₁ + x₂ can be altered between 0.1mm and approximately 3mm. Satisfactory cleaves are not obtained for greater than 3mm because of the flexibility of the 125micron diameter fibres. Larger and smaller fibre diameters can be cleaved by suitable choice of x₁, x₂ and h.

The diamond blade 510 should preferably have a length at least as long as the width of the fibre ribbon, i.e. a length of greater than 1.0mm for a 4-fibre ribbon. The height of the diamond blade can be adjusted so that the blade is horizontal at the point of scratching the fibres so that all fibres cleave almost simultaneously. This has advantages in maintaining consistent stresses in all of the fibres, giving more consistent cleave lengths. It also means that the movement of the diamond blade can be stopped soon after scratching so that the blade does not significantly touch the cleaved fibre ends.

The angle cleaved fibre ends 601 have a shape as shown in Fig.9, showing the contours of equal end angle 602 (as measured by interference microscopy), the core of the fibre 603 and the initiation scratch 604. The centre of the cleaved fibre is at a repeatable angle of about 8° away from the perpendicular. The angle of the core can be controlled by adjustment of x₁, x₂ and h, as taught in Murgatroyd.

The end angle of the core can be adjusted by changing the magnitude of the deflection h of the anvil, although such a change also affects the tension present in the fibres. Alternatively, the end angle can be altered without significantly changing the tension by changing the distance between the anvil edge and the edge of the fixed clamp, i.e. the value of x₁ + x₂, either by moving the anvil or by adjusting the position of the fixed clamp.

The fibre ends so cleaved will have the same length with respect to the ribbon fibre clamped in the movable clamp 301, provided that the blade scratches the fibres in a direction orthogonal to their axes and that there is no slippage of individual fibres in the encapsulation. It has been found that the cleave lengths, i.e. the distance from the end of the coating to the point of the cleave, are equal for all fibres in a 4-fibre ribbon to better than 25microns.

The position of the movable clamp 301 secured in the cleaver's body dictates the cleave length. The stop 502 against which the clamp 301 is secured can be moved, for instance by the use of an eccentric cam, to increase or decrease the cleave length. Fibre ribbons of different fibre count can be cleaved in the same tool by interchanging the left-and/or right-hand clamps suitable for the different widths of the different numbers of fibres in the ribbon.

It is a further advantage of this invention that the offcut fibres are held together by the remaining coating glove. This makes them very much easier to discard and contributes significantly to the Health and Safety Aspects of using this tool because loose fibres are not present.

In a second application, the window-stripped fibres can be placed in a ribbon fibre cleaver to create perpendicular ribbon cleaved ends, as shown in Fig 10. The window-stripped fibre 21 (only 1 fibre of the ribbon is shown) in its clamp 301 is placed in the cleaver secured against a stop 502 and the coating glove 22 is secured in the fixed clip 501. The stripped fibres 21 are tensioned by deflection with an anvil 701 that has two arms 702, 703 where the anvil acts at a point between the two clamps. For a clamp spacing of about 20mm, deflecting the fibres by about 1.0mm will give a tension in each fibre of about 2N, as required to obtain an optimum cleave on 125micron diameter fibre. The fibres are scratched by a blade 510 at a point between the two arms of the anvil 702, 703 and cleave giving ends that are mirror-smooth with angled ends close to the perpendicular. The angle of the cleaved ends can be adjusted to less than 0.5° from the perpendicular by adjusting the relative heights of the two arms of the anvil or the relative height of the clamps 301, 501 or the relative distance between the anvil arms and the clamps.

The ribbon fibre cleaves here obtained are consistently better than those obtained by competitor tools such as those made by Fujikura and others. This is because the fibres are all pre-tensioned prior to scratching and so the scratches have a well-controlled depth of only about 3mm. Furthermore, the end angles achieved by this perpendicular ribbon cleaver are less than those of competitor cleavers because the fibres do not twist during clamping and cleaving.

In a third application, the window-stripped fibre ribbon can be placed in an apparatus to create Fibre Bragg Gratings in each fibre in the fibre ribbon. The encapsulation 10, 22 are clamped using clamps 301, 501 to locate the fibres. UV light 801 is directed on to the fibres 21 after passing through a phase grating 802. Provided that the fibres are photosensitised, e.g. by hydrogen loading of Ge-doped fibre cores, and the fibres are close enough to the phase masks, Fibre Bragg Gratings will be written in to the fibres. After writing the FBGs, the window-stripped fibres can be recoated to protect the glass from damage and moisture.

The window stripped fibre ribbon is particularly useful because the fibres in the ribbon can be securely clamped through their coatings at two points. Moving apart the two clamping points axially in directions 803, 804 or deflecting the fibres transversely with an anvil will serve to tension the fibres. If FBGs are written in to tensioned fibre, and the tension then released after fabrication, the operating spectral profile of the FBG will move to shorter wavelength compared to FBGs written in to untensioned fibres. The window-stripped fibres arising from this invention are well suited to being used to write FBGs using applied tension to control the operating conditions.

It is understood that although applications using window-stripped ribbons have been described for cleaving and FBG manufacturer, other applications also exist for window-stripped fibres.

It will be well appreciated by those skilled in the art the above description relating to a ribbon fibres describes a one arm/post anvil arrangement by implication. This has been done for illustrative purposes only and the broad description is equally applicable to two arm/post arrangements. In the case of a two-arm/post anvil, the angle of the core can be adjusted both by control of these parameters and also by variation of the angle formed by the differing heights of the anvil.

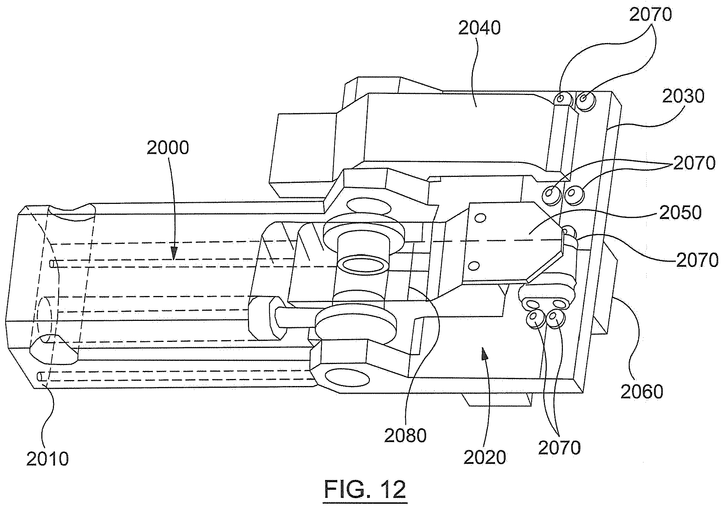

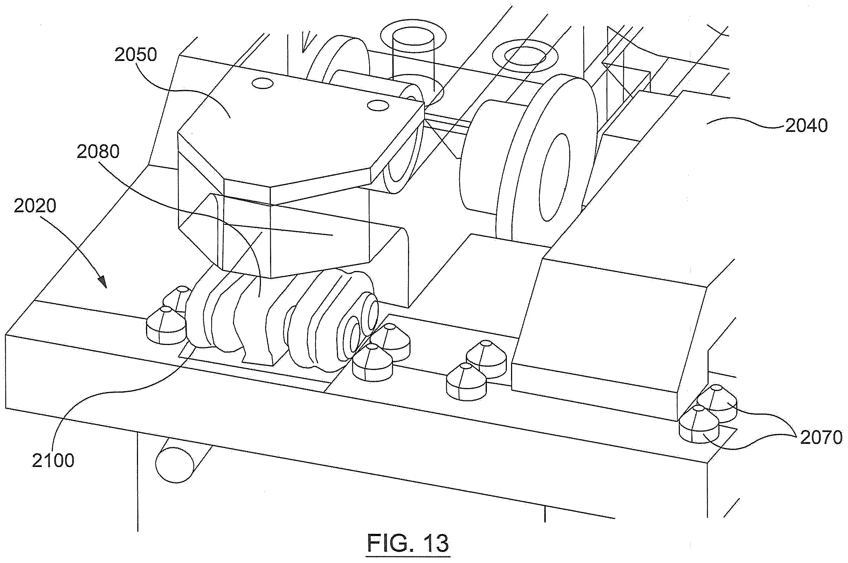

Now referring to Figures 12 and 13 of the drawings, there is shown a hand tool 2000 that operates in accordance with the present invention.

The hand tool is an optical fibre cleaving tool 2000 which includes:
a handle 2010;
a reference plane bed 2020 pivotally mounted to the handle 2010, and having a sideward projecting section 2030 and a cleaving hole 2100 located at the end of the plane remote from the pivotal mounting to the handle 2010 but in line with the handle 2010;
a pre-clamp 2040 pivotally mounted on the sideward projecting section 2030 of the reference plane 2020;
an anvil 2050 mounted substantially in line with the handle 2010 on the upper side of the reference plane so that when operated the anvil will co-operate with the cleaving hole;
   a blade mounting block 2060 mounted on the lowermost side of the reference plane 2020 in close proximity to the anvil 2050;
eight locating dowels 2070 provided in four spaced apart pairs in alignment with one another and running along the side of the reference plane remote from the pivotal mountings so that an optical fibre mounted in the dowels will extend over the cleaving hole 2100 and such that the spacing between the dowels immediately adjacent the cleaving hole 2100 will only accept the end section of the fibre; and
optical fibre cleaving means 2080 including a blade advance screw 2090.

The cleaving blade mounting block 2060 is mounted on the underside of the reference plane bed 2020 at a position directly below the anvil 2050 and in relation to a hole provided in said reference plane bed 2020.

The optical fibre cleaving means 2080 is mounted to the blade mounting block and projects into the cleaving hole 2100. Mounted to the sides of the anvil 2040 are four elastomeric "O" rings mounted in two distinct groups of two 2110, 2111 and 2120, 2121.

In operation an optical fibre having an end section with the coating removed is deployed between the dowels 2070 thereof is placed in the hand tool so that the fibre extends between the four pairs of locating dowels 2070. The fibre may then be pulled so that the coating of the fibre abuts the locating dowels 207 adjacent the cleaving hole 2100.and the end section is correctly position and extends over the cleaving hole 2100.

The coated fibre is clamped in position by deployment of the pre-clamp 204 and the optical fibre is securely locked in to position on the reference plane.

The hand tool is operated and the anvil 2050 deployed so that the elastomeric "O" rings engage with the optical fibre deflecting it into the indentations 2111 at the sides of the hole 2100 soft contacting the fibre and securing the fibre in position for cleaving. The "soft" clamping "O" rings engage the fibre preventing slippage of the fibre.

Further as the anvil 2040 is deployed the cleaving means extends into the cleaving hole 2010 and deflects the optical fibre into the cleaving hole 2100. The interaction of the edges of the cleaving hole 2100 and the cleaving means, means that the optical fibre is deflected in a first direction as it starts to cross the cleaving hole and a second direction as it leaves the cleaving hole 2100.

The blade of the cleaving means 2080 is deployed to scratch the fibre in the cleaving hole and therefore in the region where the internal stresses have been induced in the optical fibre a cleave is effected.

In the example of the hand tool described the "O" rings are deployed in a vertical orientation so that the outer surface of the "O" engages the fibres. It will be appreciated that this is only one configuration for the deployment of the "O" rings and in a second arrangement the "O" rings may be deployed on their sides so that the sides of the "O" rings engage the optical fibres.

It will be understood that one rather than two "O"-rings can be used on either side of the cleaving hole 2100 to soft clamp the fibres. Furthermore, the "O"-ring on the side of the cleaving hole adjacent to the remote clamp 2040 can be eliminated, using only a single "O"-ring on the offcut side of the fibre, because the remote clamp 2040 will adequately clamp the fibre on this side of the cleaving hole, allowing tension to be present in the cleave. The fibre(s) are deflected from their natural path in to an "S"-shaped bend, giving a cleaved end face characterised by a mixture of Fig. 2 and Fig. 9.

A further embodiment which is not part of the present invention can be understood in which the clamping is "non-trapping". The "O"-ring or other plate can contact the fibre on the offcut side to cause a re-bend of the fibre in to an "S"-shape without trapping the fibre hence no overall tension will be present in the fibre. Angled cleaving will occur with an end face as characterised by Fig. 2. The fibre may be secured with a remote clamp 2040 or may be entirely free to move through the cleaving apparatus, employing non-trapping clamps on both sides of the anvil.

It will be understood that any of the clamping methods described herein can be used to clamp and cleave arrays of ribbon fibre. The stresses induced in all of the fibres and hence the shape of the resultant cleaves will be essentially identical in all fibres in the ribbon. A scratching blade means is required to form initiation scratches in each fibre in the ribbon.

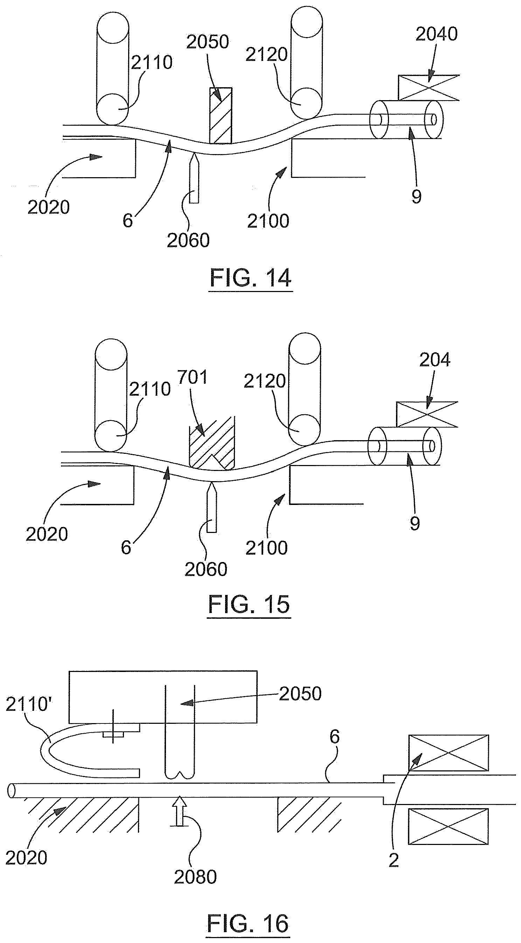

The hand tool here desribed can also be used to effect substantially perpendicular cleaves for both single and ribbon fibres. The fibre is clamped on either side of the cleaving hole using "O"-rings. Alternatively, the fibre may be clamped by a single "O"-ring on the offcut side and the "O"-ring on the side of the cleaving hole adjacent to the remote clamp 2040 can be eliminated because the fibre will be trapped by remote clamp ensuring tension is present in the fibre(s) giving a good cleave. As shown in Fig. 15, the anvil will have two arms, as shown in Fig. 10 and the resultant stresses in the fibre will be axial leading to a near-perpendicular cleave. The angle of the cleaved ends can be adjusted to less than 0.5° from the perpendicular by adjusting the relative heights of the two arms of the anvil, and/or the relative distance between the anvil arms and the sides of the cleaving hole and/or the relative heights of the two sides of the cleaving hole.

Figure 16, which is not part of the present invention, shows an alternative arrangement for holding the fibre in which the O rings (2110 etc) are replaced by one or more resilient bent members 2110'. All the other number are used to indicate like components to those described with regard to Figures 12 to 15 of the drawings. These resilient members 2110' may be coated with an elastomeric material to protect the fibre held by the member. The resilient member is formed to apply exactly the right force to the fibre to be gripped with the elastomeric material cushioning the fibre and protecting it against damage by the member 2110'

In a further arrangement the O (rings could be replaced with shaped rubber blocks which could be glued in position and frozen to enable them to be formed into the correct shape.

Further the anvil 2050 shown in this drawing is a two arm anvil so the hand tool is suitable for the forming of angled cleaves..

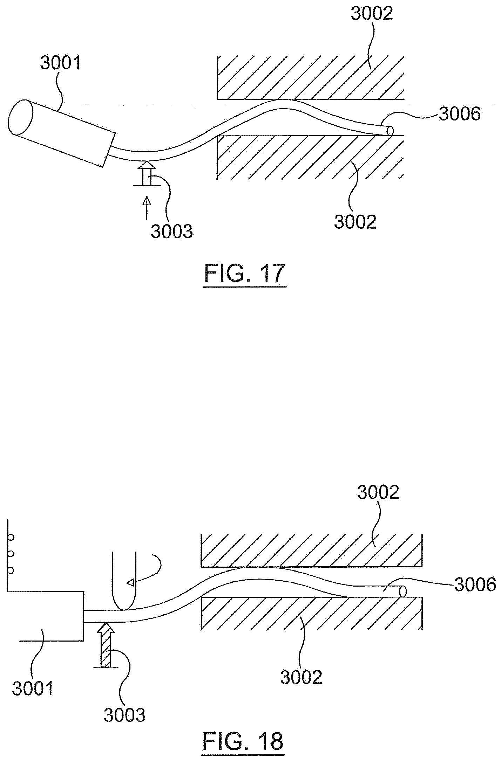

Figures 17 and 18 of the drawings show an alternative method of re-bending the optical fibre. In this arrangement the end of the optical fibre 3006 is located between plates 3002 so that it is loosely housed and not trapped. The protruding end of the optical fibre is located in a ferrule 3001 that is moved to induce an S-bend in the optical fibre. The optical fibre may then be presented for cleaving in the normal manner.

Figure 17 shows an arrangement where an angled cleave is desired and in this case the ferrule position may be adjusted so that blade 3003 scratches the fibre so as to induce a cleave at the correct angle. Figure 18 shows an arrangement where the desired cleave is perpendicular and in this embodiment a further component issued, for example the anvil, to present the optical fibre at the correct angle for perpendicular cleaving.

## Claims

1. A method of cleaving an optical fibre which has a natural path which method includes
trapping the fibre, on either side of a cleaving hole (2100) in a reference plane bed (2020), against said reference plane bed (2020) with one or more resilient members (2110, 2120);
providing an anvil pivotally located with respect to the reference plane bed, the anvil comprising a fibre deflector means that is designed to extend into the cleaving hole provided in the reference plane bed, and
deflecting the optical fibre (6) away from its natural path in a first direction and spaced longitudinal along its length deflecting the optical fibre (6) in a second direction opposed to the first direction so as to induce internal stresses in the fibre that extend substantially across the core of the optical fibre over a region of the length of the optical fibre and scratching the surface of the optical fibre in the region with a cleaving blade so as to induce cleaving of the optical fibre wherein the cleaving is controlled by controlling the internal stresses induced in the fibre.

2. A method of cleaving an optical fibre as claimed in claim 1, wherein the optical fibre is in a ribbon array (10) and which method comprises opening a window in the encapsulation (11) surrounding the ribbon array (10) so as to allow access to the optical fibres (21) and allow deflection of the optical fibre of the array and scratching the optical fibre to induce the cleave.

3. A method as claimed in claim 2, wherein the encapsulation of the ribbon fibre may be window-stripped as follows:
the encapsulated ribbon (10) is located in a fibre clip that is placed in a thermal stripping tool so that approximately 22mm of the distal end of the coating is removed
the ribbon (10) is repositioned in the clip with approximately 33mm protruding and replaced in the thermal stripper.

4. A method as claimed in claim 3, wherein the window-stripped ribbon, still located in the clip is placed in a cleaving tool and cleaved as follows:
clamping each of the fibre(s) at two points by clamping through the coating tensioning each of the fibres by deflecting the fibre(s) laterally between the clamps using an anvil (504)
bending and/or shearing the fibre(s) using the anvil (504) to change the stress profile in the fibre(s) and to provide resistance to the scratching means (510)
scratching the stressed fibre(s) with a sharp edge such as a diamond blade.

5. Apparatus for cleaving an optical fibre (6) in which the optical fibre passes through the apparatus along a natural path and has an end section thereof in which the glass strand of the fibre is exposed, includes means to deflect the optical fibre from its natural path in a first direction; means to deflect the optical fibre from its natural path in a second direction in opposition to the first direction; and means to scratch and cleave the optical fibre (6) wherein the end section of the optical fibre may or may not be trapped and the deflection of the optical fibre induces the fibre to re-bend so that internal stresses in the fibre over a region of the length of the fibre are induced and the means to scratch is operated to scratch the surface of the fibre in the region and the cleave induced **characterised in that** the apparatus further comprises:
one or more resilient members (2110, 2120) provided to trap the fibres against a reference plane bed (2020) of the apparatus, the reference plane bed (2020) having a cleaving hole (2100) therein and said resilient members (2110, 2120) arranged to clamp the fibres on either side of said cleaving hole (2100); and
an anvil pivotally located with respect to the reference plane bed, the anvil comprising a fibre deflector means that is designed to extend into the cleaving hole provided in the reference plane bed.

6. Apparatus as claimed in claim 5, wherein the apparatus applies a longitudinal extension force to the optical fibre.

7. Apparatus as claimed in claim 5 or claim 6, wherein said apparatus further includes an anvil.

8. Apparatus as claimed in claim 7, wherein the anvil is a single arm/post anvil (2050).

9. Apparatus as claimed in claim 7, wherein the anvil is a two arm anvil (701).

10. Apparatus as claimed in any one of claims 5 to 9, wherein the means to deflect the optical fibre (6) from its natural path includes at least one guide rod which guide rod is movable in relation to the fibre so that it deflects the optical fibre from its natural path inducing the necessary internal stresses in the fibre.

11. Apparatus as claimed in claim 10, wherein the guide rod is formed with means to enable the optical fibre (6) being deflected to be located and correctly aligned with regard to the guide rod to facilitate accurate cleaving.

12. Apparatus as claimed in claim 11, wherein the means to enable is a groove formed so that when the fibre (6) is located within the groove said fibre will extend above the sides of the groove.

13. Apparatus as claimed in any of claims 10 to 12, wherein the guide rod is formed from any suitable material, or is coated with any suitable material.

14. Apparatus as claimed in any one of claims 10 to 13, wherein the guide rod is formed, or coated, with a material that acts to grip the material of the coating of the optical fibre.

15. Apparatus as claimed in any one of claims 5 to 9, wherein the means to deflect the optical fibre comprises two plate like components between which the end section of the optical fibre is located.

16. Apparatus as claimed in any one of claims 5 to 15, wherein the means to deflect the end section of the optical fibre in a first direction comprises a guide rod and the means to deflect the optical fibre in a second direction comprises two flat plates like members that confine the optical fibre (6) inducing the necessary deflection to induce the internal stresses.

17. Apparatus as claimed in any of claims 5 to 9, wherein the means to deflect the optical fibre (9) comprises a ferrule (3001) located over the end of the fibre to be cleaved and the optical fibre is located between closely orientated components (3002) so that the ferrule (3001)can be moved to deflect the optical fibre.

18. Apparatus as claimed in any of claims 5 to 9, wherein the one or more members soft clamp the coated optical fibre(s).

19. Apparatus as claimed in claim 18, wherein the resilient members (2110, 2120) are "O" rings.

20. Apparatus as claimed in claim 5, wherein the members (2110') comprise a leaf spring.

21. Apparatus as claimed in claim 19 or 20, wherein the members are coated with an elastomeric or rubber material.

22. Apparatus as claimed in claim 5 , wherein the apparatus comprises hand tool comprising a handle (2010); a bed pivotally mounted to the handle (2010) providing the reference plane for cleaving of an optical fibre; an anvil (2050) pivotally located with respect to the reference plane (2020) and including fibre deflector means that is designed to extend into a throughway (2100) provided in the reference plane (2020); means to locate an optical fibre to be cleaved with respect to the reference plane so that it extends across the throughway (2100) in the reference plane; one or more means (2040) of clamping the fibre to the reference plane (2020) on either side of the throughway; and a cleaving blade arrangement (2080) located to scratch the optical fibre as it extends across the throughway (2100) in the reference plane (2020) wherein an end section of the optical fibre having the coating stripped therefrom is located in the means to locate and so extends over the throughway (2100) and when the hand tool is operated the anvil (2050) pivots with respect to the reference plane (2020) so that the at least one elastomeric member or elastomeric coated member engage the reference plane immediately adjacent the throughway soft clamping the optical fibre and the optical fibre deflector means in combination with the sides of the throughway deflects the optic fibre in a first direction on one side and in a second direction on the other side from its natural path inducing the necessary internal stresses in the optical fibre in the region across the throughway (2100) and the blade (2080) scratches the optical fibre to effect the cleaving of the optical fibre.

23. Apparatus as claimed in any of claims 5 to 22, wherein the means to locate the optical fibre may comprises location dowels (2070) arranged in pairs wherein the optical fibre is disposed between the respective dowels of a pair for locating the optical fibre.

24. Apparatus as claimed in claim 23, wherein the dowels (2070) are arranged in pairs located at discrete points along the length of the natural path of the optical fibre.

25. Apparatus as claimed in claim 23 or 24, wherein the dowels (2070) are disposed on both sides of the throughway respective of the natural path of an optical fibre.

26. Apparatus as claimed in any of claims 23 to 25, wherein the spacing between the dowels (2070) in a pair of dowels is set to allow passage of the coated fibre or the glass strand of the fibre only.

## Patentansprüche

1. Verfahren zum Spalten einer Lichtleitfaser, die einen natürlichen Weg hat, wobei das Verfahren Folgendes umfasst:
das Einklemmen der Faser, auf beiden Seiten eines Spaltlochs (2100) in einem Bezugsebenenbett (2020), gegen das Bezugsebenenbett (2020) mit einem oder mehreren elastischen Elementen (2110, 2120),
das Bereitstellen eines Ambosses, der schwenkbar in Bezug auf das Bezugsebenenbett angeordnet ist, wobei der Amboss Faserablenkungsmittel umfasst, die so gestaltet sind, dass sie sich in das Spaltloch, das in dem Bezugsebenenbett bereitgestellt wird, erstrecken, und
das Ablenken der Lichtleitfaser (6) weg von seinem natürlichen Weg in einer ersten Richtung und, in Längsrichtung entlang ihrer Länge beabstandet, das Ablenken der Lichtleitfaser (6) in einer zweiten Richtung, die zu der ersten Richtung entgegengesetzt ist, um so innere Spannungen in der Faser zu induzieren, die sich im Wesentlichen über den Kern der Lichtleitfaser über einen Bereich der Länge der Lichtleitfaser erstrecken, und das Ritzen der Oberfläche der Lichtleitfaser in dem Bereich mit einer Spaltklinge, um so ein Spalten der Lichtleitfaser zu veranlassen, wobei das Spalten durch das Steuern der in der Faser induzierten inneren Spannungen gesteuert wird.

2. Verfahren zum Spalten einer Lichtleitfaser nach Anspruch 1, wobei die Lichtleitfaser in einer Bandanordnung (10) vorliegt und wobei das Verfahren das Öffnen eines Fensters in der Einkapselung (11), welche die Bandanordnung (10) umgibt, um einen Zugang zu den Lichtleitfasern (21) zu ermöglichen und ein Ablenken der Lichtleitfaser von der Anordnung und ein Ritzen der Lichtleitfaser, um die Spaltung zu veranlassen, umfasst.

3. Verfahren nach Anspruch 2, wobei die Einkapselung der Bandfaser fensterabgemantelt werden kann, wie folgt:
das eingekapselte Band (10) wird in einer Faserklemme angeordnet, die in einem thermischen Abmantelungswerkzeug platziert wird, so dass ungefähr 22 mm von dem distalen Ende des Überzugs entfernt werden,
das Band (10) wird erneut in der Klemme angeordnet, wobei ungefähr 33 mm vorstehen, und in dem thermischen Abmantler ersetzt.

4. Verfahren nach Anspruch 3, wobei das fensterabgemantelte Band, das noch in der Klemme angeordnet ist, in einem Spaltwerkzeug angeordnet und gespalten wird, wie folgt:
das Festklemmen jeder der Fasern an zwei Punkten durch das Festklemmen durch den Überzug,
das Spannen jeder der Fasern durch das seitliche Ablenken der Fasern zwischen den Klemmen unter Verwendung eines Ambosses (504),
das Biegen und/oder Scheren der Fasern unter Verwendung des Ambosses (504), um das Spannungsprofil in den Fasern zu verändern und um einen Widerstand für die Ritzmittel (510) bereitzustellen,
das Ritzen der beanspruchten Fasern mit einer scharfen Kante, wie beispielsweise einer Diamantklinge.

5. Vorrichtung zum Spalten einer Lichtleitfaser (6), in der die Lichtleitfaser entlang eines natürlichen Weges durch die Vorrichtung hindurchgeht und eine Endsektion derselben hat, in welcher der Glasstrang der Faser freigelegt ist, die Mittel zum Ablenken der Lichtleitfaser von ihrem natürlichen Weg in einer ersten Richtung, Mittel zum Ablenken der Lichtleitfaser von ihrem natürlichen Weg in einer zweiten Richtung, entgegengesetzt zu der ersten Richtung, und Mittel zum Ritzen und Spalten der Lichtleitfaser (6) einschließt, wobei die Endsektion der Lichtleitfaser eingeklemmt werden kann oder nicht und die Ablenkung der Lichtleitfaser die Faser veranlasst, sich zurückzubiegen, so dass innere Spannungen in der Faser über einen Bereich der Länge der Faser induziert werden, und die Mittel zum Ritzen betätigt werden, um die Oberfläche der Faser in dem Bereich zu ritzen, und die Spaltung veranlasst wird, **dadurch gekennzeichnet, dass** die Vorrichtung ferner Folgendes einschließt:
ein oder mehrere elastischen Elementen (2110, 2120), die bereitgestellt werden, um die Fasern gegen ein Bezugsebenenbett (2020) der Vorrichtung einzuklemmen, wobei das Bezugsebenenbett (2020) ein Spaltloch (2100) in demselben hat und die elastischen Elemente (2110, 2120) dafür angeordnet sind, die Fasern auf beiden Seiten des Spaltlochs (2100) einzuklemmen, und
einen Amboss, der schwenkbar in Bezug auf das Bezugsebenenbett angeordnet ist, wobei der Amboss Faserablenkungsmittel umfasst, die so gestaltet sind, dass sie sich in das Spaltloch, das in dem Bezugsebenenbett bereitgestellt wird, erstrecken.

6. Vorrichtung nach Anspruch 5, wobei die Vorrichtung eine Längsausdehnungskraft auf die Lichtleitfaser ausübt.

7. Vorrichtung nach Anspruch 5 oder Anspruch 6, wobei die Vorrichtung ferner einen Amboss einschließt.

8. Vorrichtung nach Anspruch 7, wobei der Amboss ein einarmiger/Pfosten-Amboss (2050) ist.

9. Vorrichtung nach Anspruch 7, wobei der Amboss ein zweiarmiger Amboss (701) ist.

10. Vorrichtung nach einem der Ansprüche 5 bis 9, wobei die Mittel zum Ablenken der Lichtleitfaser (6) von ihrem natürlichen Weg wenigstens einen Führungsstab einschließen, wobei der Führungsstab im Verhältnis zu der Faser so beweglich ist, dass er die Lichtleitfaser von ihrem natürlichen Weg ablenkt, wobei die notwendigen inneren Spannungen in der Faser induziert werden.

11. Vorrichtung nach Anspruch 10, wobei der Führungsstab mit Mitteln ausgebildet ist zum Ermöglichen, dass die Lichtleitfaser (6), die abgelenkt wird, in Bezug auf den Führungsstab positioniert und richtig ausgerichtet werden kann, um ein genaues Spalten zu erleichtern.

12. Vorrichtung nach Anspruch 11, wobei die Mittel zum Ermöglichen eine Rille ist, die so geformt ist, dass, wenn die Faser (6) innerhalb der Rille angeordnet ist, sich die Faser oberhalb der Seiten der Rille erstreckt.

13. Vorrichtung nach einem der Ansprüche 10 bis 12, wobei der Führungsstab aus einem beliebigen geeigneten Material geformt ist oder mit einem beliebigen geeigneten Material überzogen ist.

14. Vorrichtung nach einem der Ansprüche 10 bis 13, wobei der Führungsstab aus einem Material geformt oder mit demselben überzogen ist, das wirkt, um das Material des Überzugs der Lichtleitfaser zu greifen.

15. Vorrichtung nach einem der Ansprüche 5 bis 9, wobei die Mittel zum Ablenken der Lichtleitfaser zwei plattenartige Bauteile umfassen, zwischen denen die Endsektion der Lichtleitfaser positioniert wird.

16. Vorrichtung nach einem der Ansprüche 5 bis 15, wobei die Mittel zum Ablenken der Endsektion der Lichtleitfaser in einer ersten Richtung einen Führungsstab umfassen und die Mittel zum Ablenken der Lichtleitfaser in einer zweiten Richtung zwei flache plattenartige Bauteile umfassen, welche die Lichtleitfaser (6) einengen, wobei die notwendige Ablenkung veranlasst wird, um die inneren Spannungen zu induzieren.

17. Vorrichtung nach einem der Ansprüche 5 bis 9, wobei die Mittel zum Ablenken der Lichtleitfaser (6) eine Zwinge (3001) umfassen, die über dem Ende der zu spaltenden Faser angeordnet ist, und die Lichtleitfaser zwischen eng ausgerichteten Bauteilen (3002) angeordnet ist, so dass die Zwinge (3001) bewegt werden kann, um die Lichtleitfaser abzulenken.

18. Vorrichtung nach einem der Ansprüche 5 bis 9, wobei das eine oder die mehreren Elemente, die überzogenen Lichtleitfasern weich festklemmen.

19. Vorrichtung nach Anspruch 18, wobei die elastischen Elemente (2110, 2120) "O"-Ringe sind.

20. Vorrichtung nach Anspruch 5, wobei die Elemente (2110') eine Blattfeder umfassen.

21. Vorrichtung nach Anspruch 19 oder 20, wobei die Elemente mit einem Elastomer- oder Gummimaterial überzogen sind.

22. Vorrichtung nach Anspruch 5, wobei die Vorrichtung ein Handwerkzeug umfasst, das Folgendes umfasst: einen Handgriff (2010), ein schwenkbar an dem Handgriff (2010) angebrachtes Bett, das die Bezugsebene zum Spalten einer Lichtleitfaser bereitstellt, einen Amboss (2050), der schwenkbar in Bezug auf die Bezugsebene (2020) angeordnet ist und Faserablenkungsmittel einschließt, die so gestaltet sind, dass sie sich in einen Durchgang (2100) erstrecken, der in der Bezugsebene (2020) bereitgestellt wird, Mittel zum Positionieren einer zu spaltenden Lichtleitfaser in Bezug auf die Bezugsebene, so dass sie sich über den Durchgang (2100) in der Bezugsebene erstreckt, ein oder mehrere Mittel (2040) zum Festklemmen der Lichtleitfaser an der Bezugsebene (2020) auf beiden Seiten des Durchgangs und eine Spaltklingenanordnung (2080), die dafür angeordnet ist, die Lichtleitfaser zu ritzen, wenn sie sich über den Durchgang (2100) in der Bezugsebene (2020) erstreckt, wobei eine Endsektion der Lichtleitfaser, die den Überzug von derselben abgemantelt hat, in den Mitteln zum Positionieren angeordnet ist und sich so über den Durchgang (2100) erstreckt, und wenn das Handwerkzeug betätigt wird, der Amboss (2050) in Bezug auf die Bezugsebene (2020) schwenkt, so dass das wenigstens eine Elastomerelement oder elastomerbeschichtete Element die Bezugsebene unmittelbar angrenzend an den Durchgang in Eingriff nimmt, wobei die Lichtleitfaser weich festgeklemmt wird, und die Lichtleitfaser-Ablenkungsmittel in Verbindung mit den Seiten des Durchgangs die Lichtleitfaser in einer ersten Richtung auf der einen Seite und in einer zweiten Richtung auf der anderen Seite von ihrem natürlichen Weg ablenken, wobei die notwendigen inneren Spannungen in der Lichtleitfaser in dem Bereich über den Durchgang (2100) induziert werden, und die Klinge (2080) die Lichtleitfaser ritzt, um das Spalten der Lichtleitfaser durchzuführen.

23. Vorrichtung nach einem der Ansprüche 5 bis 22, wobei die Mittel zum Positionieren der Lichtleitfaser Positionierungsstifte (2070) umfassen können, die in Paaren angeordnet sind, wobei die Lichtleitfaser zwischen den jeweiligen Stiften eines Paares angeordnet wird zum Positionieren der Lichtleitfaser.

24. Vorrichtung nach Anspruch 23, wobei die Stifte (2070) in Paaren angeordnet sind, die an getrennten Punkten entlang der Länge des natürlichen Weges der Lichtleitfaser angeordnet sind.

25. Vorrichtung nach Anspruch 23 oder 24, wobei die Stifte (2070) auf beiden Seiten des Durchgangs beziehungsweise des natürlichen Weges einer Lichtleitfaser angeordnet sind.

26. Vorrichtung nach einem der Ansprüche 23 bis 25, wobei der Abstand zwischen den Stiften (2070) in einem Paar von Stiften so festgesetzt wird, dass der Durchgang der beschichteten Faser oder nur des Glasstrangs der Faser ermöglicht wird.

## Revendications

1. Procédé de clivage d'une fibre optique qui a un trajet naturel, lequel procédé comprend
le piégeage de la fibre, de chaque côté d'un orifice de clivage (2100) dans un banc plan de référence (2020), contre ledit banc plan de référence (2020) avec un ou plusieurs éléments élastiques (2110, 2120) ;
la prévision d'une enclume positionnée de manière pivotante par rapport au banc plan de référence, l'enclume comprenant des moyens de déflexion de fibre qui sont conçus pour s'étendre dans l'orifice de clivage prévu dans le banc plan de référence, et
la déflexion de la fibre optique (6) hors de son trajet naturel dans une première direction et, espacée longitudinalement sur sa longueur, la déflexion de la fibre optique (6) dans une deuxième direction opposée à la première direction de manière à induire des contraintes internes dans la fibre qui s'étendent sensiblement à travers le noyau de la fibre optique sur une région de la longueur de la fibre optique, et le rayage de la surface de la fibre optique dans la région avec une lame de clivage de manière à induire un clivage de la fibre optique, dans lequel le clivage est contrôlé en contrôlant les contraintes internes induites dans la fibre.

2. Procédé de clivage d'une fibre optique selon la revendication 1, dans lequel la fibre optique est dans un réseau ruban (10), et lequel procédé comprend l'ouverture d'une fenêtre dans l'encapsulation (11) entourant le réseau ruban (10) de manière à permettre l'accès aux fibres optiques (21) et permettre la déflexion de la fibre optique du réseau et le rayage de la fibre optique pour induire le clivage.

3. Procédé selon la revendication 2, dans lequel une fenêtre peut être dénudée de l'encapsulation de la fibre ruban comme suit :
le ruban encapsulé (10) est positionné dans une pince de fibre qui est placée dans un outil thermique à dénuder de sorte qu'environ 22 mm de l'extrémité distale du revêtement soient retirés,
le ruban (10) est repositionné dans la pince avec environ 33 mm faisant saillie et placé de nouveau dans le dispositif thermique à dénuder.

4. Procédé selon la revendication 3, dans lequel le ruban à fenêtre dénudée, encore positionné dans la pince, est placé dans un outil de clivage et clivé comme suit :
le serrage de chacune des fibres au niveau de deux points par serrage à travers le revêtement,
la mise sous tension de chacune des fibres en défléchissant les fibres latéralement entre les points de serrage en utilisant une enclume (504),
le cintrage et/ou le cisaillement des fibres en utilisant l'enclume (504) pour modifier le profil de contrainte dans les fibres et pour fournir une résistance aux moyens de rayage (510),
le rayage des fibres contraintes avec un bord tranchant tel qu'une lame en diamant.

5. Appareil pour cliver une fibre optique (6), dans lequel la fibre optique passe à travers l'appareil le long d'un trajet naturel et a une section d'extrémité de celle-ci dans laquelle le toron de verre de la fibre est exposé, qui comprend des moyens pour défléchir la fibre optique de son trajet naturel dans une première direction ; des moyens pour défléchir la fibre optique de son trajet naturel dans une deuxième direction opposée à la première direction ; et des moyens pour rayer et cliver la fibre optique (6), dans lequel la section d'extrémité de la fibre optique peut ou peut ne pas être piégée et la déflexion de la fibre optique amène la fibre à se replier de sorte que des contraintes internes dans la fibre sur une région de la longueur de la fibre soient induites et que les moyens pour rayer soient amenés à rayer la surface de la fibre dans la région et que le clivage soit induit, **caractérisé en ce que** l'appareil comprend en outre :
un ou plusieurs éléments élastiques (2110, 2120) prévus pour piéger les fibres contre un banc plan de référence (2020) de l'appareil, le banc plan de référence (2020) comportant un orifice de clivage (2100) dans celui-ci et lesdits éléments élastiques (2110, 2120) étant agencés pour serrer les fibres de chaque côté dudit orifice de clivage (2100) ; et
une enclume positionnée de manière pivotante par rapport au banc plan de référence, l'enclume comprenant des moyens de déflexion de fibre qui sont conçus pour s'étendre dans l'orifice de clivage prévu dans le banc plan de référence.

6. Appareil selon la revendication 5, dans lequel l'appareil applique une force d'extension longitudinale à la fibre optique.

7. Appareil selon la revendication 5 ou la revendication 6, dans lequel ledit appareil comprend en outre une enclume.

8. Appareil selon la revendication 7, dans lequel l'enclume est une enclume à levier/montant unique (2050).

9. Appareil selon la revendication 7, dans lequel l'enclume est une enclume à deux leviers (701).

10. Appareil selon l'une quelconque des revendications 5 à 9, dans lequel les moyens pour défléchir la fibre optique (6) de son trajet naturel comprennent au moins une tige de guidage, laquelle tige de guidage peut être déplacée par rapport à la fibre de sorte qu'elle défléchisse la fibre optique de son trajet naturel, induisant les contraintes internes nécessaires dans la fibre.

11. Appareil selon la revendication 10, dans lequel la tige de guidage est formée avec des moyens pour permettre que la fibre optique (6) qui est défléchie soit positionnée et correctement alignée en relation avec la tige de guidage pour faciliter un clivage précis.

12. Appareil selon la revendication 11, dans lequel les moyens pour permettre sont une rainure formée de sorte que, lorsque la fibre (6) est positionnée dans la rainure, ladite fibre s'étende au-dessus des côtés de la rainure.

13. Appareil selon l'une quelconque des revendications 10 à 12, dans lequel la tige de guidage est formée à partir de n'importe quel matériau approprié, ou est revêtue de n'importe quel matériau approprié.

14. Appareil selon l'une quelconque des revendications 10 à 13, dans lequel la tige de guidage est formée, ou revêtue, avec un matériau qui agit pour saisir le matériau du revêtement de la fibre optique.

15. Appareil selon l'une quelconque des revendications 5 à 9, dans lequel les moyens pour défléchir la fibre optique comprennent deux composants similaires à des plaques entre lesquels la section d'extrémité de la fibre optique est positionnée.

16. Appareil selon l'une quelconque des revendications 5 à 15, dans lequel les moyens pour défléchir la section d'extrémité de la fibre optique dans une première direction comprennent une tige de guidage, et les moyens pour défléchir la fibre optique dans une deuxième direction comprennent deux éléments plats similaires à des plaques qui confinent la fibre optique (6), induisant la déflexion nécessaire pour induire les contraintes internes.

17. Appareil selon l'une quelconque des revendications 5 à 9, dans lequel les moyens pour défléchir la fibre optique (9) comprennent une ferrule (3001) positionnée sur l'extrémité de la fibre à cliver et la fibre optique est positionnée entre des composants orientés étroitement (3002) de sorte que la ferrule (3001) puisse être déplacée pour défléchir la fibre optique.

18. Appareil selon l'une quelconque des revendications 5 à 9, dans lequel lesdits un ou plusieurs éléments serrent en douceur les fibres optiques revêtues.

19. Appareil selon la revendication 18, dans lequel les éléments élastiques (2110, 2120) sont des joints toriques.

20. Appareil selon la revendication 5, dans lequel les éléments (2110') comprennent un ressort à lame.

21. Appareil selon la revendication 19 ou 20, dans lequel les éléments sont revêtus d'un matériau élastomérique ou caoutchouteux.

22. Appareil selon la revendication 5, dans lequel l'appareil comprend un outil à main comprenant une poignée (2010) ; un banc monté de manière pivotante sur la poignée (2010) fournissant le plan de référence pour le clivage d'une fibre optique ; une enclume (2050) positionnée de manière pivotante par rapport au plan de référence (2020) et comprenant des moyens de déflexion de fibre qui sont conçus pour s'étendre dans un passage traversant (2100) prévu dans le plan de référence (2020) ; des moyens pour positionner une fibre optique à cliver par rapport au plan de référence de sorte qu'elle s'étende à travers le passage traversant (2100) dans le plan de référence ; un ou plusieurs moyens (2040) de serrage de la fibre sur le plan de référence (2020) de chaque côté du passage traversant ; et un agencement de lame de clivage (2080) positionné pour rayer la fibre optique alors qu'elle s'étend à travers le passage traversant (2100) dans le plan de référence (2020), dans lequel une section d'extrémité de la fibre optique de laquelle le revêtement est retiré est positionnée dans les moyens pour positionner et s'étend ainsi sur le passage traversant (2100) et, lorsque l'outil à main est actionné, l'enclume (2050) pivote par rapport au plan de référence (2020) de sorte que ledit au moins un élément élastomérique ou élément élastomérique revêtu vienne en prise avec le plan de référence immédiatement adjacent au passage traversant serrant en douceur la fibre optique et les moyens de déflexion de fibre optique en combinaison avec les côtés du passage traversant défléchissent la fibre optique dans une première direction d'un côté et dans une deuxième direction de l'autre côté de son trajet naturel, induisant les contraintes internes nécessaires dans la fibre optique dans la région à travers le passage traversant (2100) et la lame (2080) raye la fibre optique pour effectuer le clivage de la fibre optique.

23. Appareil selon l'une quelconque des revendications 5 à 22, dans lequel les moyens pour positionner la fibre optique peuvent comprendre des goujons de positionnement (2070) agencés par paires, dans lequel la fibre optique est disposée entre les goujons respectifs d'une paire pour positionner la fibre optique.

24. Appareil selon la revendication 23, dans lequel les goujons (2070) sont agencés par paires positionnées au niveau de points discrets le long de la longueur du trajet naturel de la fibre optique.

25. Appareil selon la revendication 23 ou 24, dans lequel les goujons (2070) sont disposés des deux côtés du passage traversant respectif du trajet naturel d'une fibre optique.

26. Appareil selon l'une quelconque des revendications 23 à 25, dans lequel l'espacement entre les goujons (2070) dans une paire de goujons est établi pour permettre le passage de la fibre revêtue ou du toron de verre de la fibre uniquement.
